(19) **Europäisches Patentamt**

**European Patent Office**

**Office européen des brevets**

(11) **EP 1 521 687 B1**

(12) **EUROPÄISCHE PATENTSCHRIFT**

(45) Veröffentlichungstag und Bekanntmachung des Hinweises auf die Patenterteilung:
**21.12.2005 Patentblatt 2005/51**

(21) Anmeldenummer: **03740337.5**

(22) Anmeldetag: **25.06.2003**

(51) Int Cl.⁷: **B60K 31/00**, B60T 7/12, B60T 7/22

(86) Internationale Anmeldenummer:
**PCT/EP2003/006694**

(87) Internationale Veröffentlichungsnummer:
**WO 2004/007232 (22.01.2004 Gazette 2004/04)**

(54) **VERFAHREN ZUR UNTERSTÜTZUNG DES FAHRERS BEI FAHRMANÖVERN**

METHOD FOR ASSISTING A DRIVER WHEN PERFORMING DRIVING MANEUVERS

PROCEDE D'ASSISTANCE AU CONDUCTEUR LORS DE MANOEUVRES DE CONDUITE

(84) Benannte Vertragsstaaten:
**DE ES FR GB IT**

(30) Priorität: **16.07.2002 DE 10232295**

(43) Veröffentlichungstag der Anmeldung:
**13.04.2005 Patentblatt 2005/15**

(73) Patentinhaber: **Daimler Chrysler AG**
**70567 Stuttgart (DE)**

(72) Erfinder:
• **FISCHER, Eckart**
**70197 Stuttgart (DE)**
• **KELLER, Helmut**
**71404 Korb (DE)**
• **KÖHNLEIN, Jens**
**70374 Stuttgart (DE)**
• **SEILER, Jakob**
**70174 Stuttgart (DE)**
• **SPIEKER, Andreas**
**70193 Stuttgart (DE)**
• **ULMER, David**
**71101 Schönaich (DE)**
• **YAP, Andy**
**71034 Böblingen (DE)**

(56) Entgegenhaltungen:
EP-A- 1 361 458     DE-A- 3 844 340
DE-A- 10 015 897     DE-A- 10 019 817
DE-A- 19 715 622     DE-A- 19 916 267
DE-A- 19 933 732     FR-A- 2 785 383

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Unterstützung des Fahrers eines Fahrzeugs bei Fahrmanövern gemäß dem Oberbegriff des Patentanspruches 1.

Ein solches Verfahren ist aus der FR 2 758 383 A1 bekannt. Zum Einparken wird dort eine Trajektorie von einer Start- in eine Zielposition berechnet, die Umlenkpunkte oder Umlenkzonen aufweist. Befindet sich das Fahrzeug beim Fahren entlang der Trajektorie in einem solchen Umlenkpunkt bzw. in einer solchen Umlenkzone, wird das Fahrzeug verzögert oder angehalten. Das Fahrzeug kann so lange im Stillstand gehalten werden, bis der Fahrer den Lenkwinkel eingestellt hat, der durch den in Fahrtrichtung gesehen nächsten Trajektorienabschnitt bis zum nächsten Umlenkpunkt vorgegeben ist.

Weiterhin offenbart die DE 198 09 416 A1 ein Verfahren zur Unterstützung des Fahrers beim Einparken. Dem Fahrer wird während des Fahrmanövers die Einparkstrategie über eine optische Anzeigevorrichtung eine akustische Sprachausgabeeinrichtung oder ein haptisches Lenkrad mitgeteilt, so dass der Fahrer der Einparkstrategie folgend in die Parklücke einparken kann.

Es ist ferner bekannt, z.B. aus der DE 197 45 127 A1, einen automatischen Bremsvorgang auszulösen, wenn der Abstand des Fahrzeugs zu einem Hindernis einen Grenzwert unterschreitet.

Hierdurch soll eine Kollision mit dem Hindernis vermieden werden.

Das gattungsgemäße Verfahren hat den Nachteil, dass die Reaktionen des Fahrers auf die Angaben der einzustellenden Lenkradstellung nicht vorhersagbar sind. Der Fahrer ist in den Regelkreis eingebunden und stellt sozusagen eine Störgröße dar. Insbesondere bei schwierigen Fahrmanövern, wie z.B. das Rückwärtseinparken in eine Parklücke am Straßenrand parallel zum Straßenrand (sogenanntes Kolonnenparken), ist es für den Fahrer schwierig, während dem Fahrmanöver die jeweils durch die Angabe angeforderte Lenkradstellung einzustellen.

Es ist daher die Aufgabe der vorliegenden Erfindung ein Verfahren und eine Vorrichtung zur Durchführung des Verfahrens der gattungsgemäßen Art derart weiterzubilden, dass dem Fahrer das Einstellen der mittels der Angabe angeforderten Lenkradstellung zu erleichtern.

Diese Aufgabe wird durch die Merkmale der Patentansprüche 1 und 12 gelöst.

Erfindungsgemäß wird die Fahrzeuglängsgeschwindigkeit fahrerunabhängig beeinflusst, wenn eine Lenkwinkelabweichung zwischen dem vom Fahrer über das Lenkrad tatsächlich eingestellten Ist-Lenkwinkel und dem der angeforderten Lenkradstellung entsprechenden Soll-Lenkwinkel vorliegt. Die Beeinflussung der Fahrzeuglängsgeschwindigkeit ist dabei vom Betrag der Lenkwinkelabweichung abhängig. Je größer die Lenkwinkelabweichung ist, desto geringer wird die Fahrzeuglängsgeschwindigkeit gewählt und eingestellt.

Ist eine solche Lenkwinkelabweichung gegeben, so entfernt sich das Fahrzeug während des Fahrmanövers von der durch die Referenztrajektorie vorgegebenen Ideallinie. Die Fahrzeuglängsgeschwindigkeit wird dann herabgesetzt, um dem Fahrer ausreichend Zeit zur Verfügung zu stellen, das Fahrzeug wieder in eine durch die Referenztrajektorie vorgegebene Fahrzeugstellung zu lenken.

Vorteilhafte Ausgestaltungen des erfindungsgemäßen Verfahrens bzw. der erfindungsgemäßen Vorrichtung ergeben sich aus den abhängigen Patentansprüchen.

Während des Fahrmanövers kann abhängig von der aktuellen Fahrzeugstellung ein die zulässigen Lenkwinkel definierender Lenkwinkel-Toleranzbereich bestimmt werden und die Beeinflussung der Fahrzeuglängsgeschwindigkeit vom Toleranzabstand zwischen dem angeforderten, vom Fahrer einzustellenden Soll-Lenkwinkel und den Toleranzbereichsgrenzen abhängen. Je geringer der Toleranzabstand zwischen dem Soll-Lenkwinkel und einer Toleranzbereichsgrenze ist, desto stärker muss die Fahrzeuggeschwindigkeit reduziert werden, wenn der Fahrer über die Lenkradstellung einen Ist-Lenkwinkel einstellt, der zwischen dem Soll-Lenkwinkel und der betreffenden Toleranzbereichsgrenze liegt.

Dabei besteht die Möglichkeit, zur Ermittlung des Lenkwinkel-Toleranzbereichs einen Drehwinkel-Toleranzbereich zu bestimmen, wobei der aktuelle Drehwinkel zwischen der Fahrzeuglängsachse und einer Koordinatenachse eines ortsfesten Koordinatensystems so lange vergrößert bzw. verkleinert wird, bis es gerade noch möglich ist, eine Trajektorie zur Zielposition rechnerisch zu bestimmen. Bei der Bestimmung der Trajektorie kann das selbe Ermittlungsverfahren herangezogen werden, wie bei der Bestimmung der Referenztrajektorie im Startpunkt des Fahrzeugs. Es würden hierbei sozusagen zwei Grenztrajektorien berechnet, die in Fahrmanöver-Fahrtrichtung gesehen ausgehend von der aktuellen Fahrzeugposition eine maximal mögliche linksseitige Grenztrajektorie und eine maximal mögliche rechtsseitige Grenztrajektorie darstellen, entlang derer das Fahrzeug noch zur Zielposition bewegt werden kann. Dabei hängt die Bestimmung der Grenztrajektorien auch davon ab, welcher minimale Radius aufgrund der Fahrzeuggeometrie gefahren werden kann und ob sich Hindernisse in der Fahrzeugumgebung befinden, an denen vorbeigefahren werden muss.

Je kleiner der Betrag des Toleranzabstandes ist, desto geringer wird die Fahrzeuglängsgeschwindigkeit gewählt und durch entsprechende Steuer- oder Regeleingriffe eingestellt.

Vorteilhafter Weise wird das Fahrzeug bis zum Stillstand verzögert und im Stillstand gehalten, so lange aufgrund der vorhandenen Lenkwinkelabweichung das Fahrzeug bei einer Weiterfahrt eine Fahrzeugstellung einnehmen würde, aus der heraus die Zielposition ohne Rangierunterbrechung des Fahrmanövers nicht mehr erreichbar ist. Können bezogen auf die aktuelle Fahrzeugposition keine oder nur noch sehr geringe Drehwinkelanweichungen vom aktuellen Drehwinkel des Fahrzeugs zugelassen werden, so wird die Fahrzeuglängsgeschwindigkeit sehr gering vorgegeben und das Fahrzeug wird sofort zum Stillstand gebracht, wenn der Fahrer eine Lenkradstellung vorgibt, die das Fahrzeug beim Weiterfahren mit dieser vom Fahrer vorgegebenen Lenkradstellung in eine Fahrzeugstellung bringen würde, aus der keine Trajektorie mehr zur Zielposition bestimmbar ist. Dadurch wird gewährleistet, dass das Fahrmanöver nicht durch Rangiermanöver unterbrochen und von neuem gestartet werden muss. Ausgehend vom Stillstand wird das Fahrzeug wieder beschleunigt, wenn eine zulässige Lenkradstellung und damit ein zulässiger Ist-Lenkwinkel vom Fahrer eingestellt wurde.

Vorteilhafter Weise wird dem Fahrer die einzustellende Lenkradstellung durch eine akustische Fahrerinformation und/oder eine optische Fahrerinformation und/oder einer haptischen Fahrerinformation übermittelt. Zur haptischen Fahrerinformation kann beispielsweise das Lenkradmoment variiert werden. Hierbei ist es z.B. denkbar, dass das Drehen des Lenkrades zur angeforderten Lenkradstellung hin erleichtert und/oder das Drehen von der angeforderten Lenkradstellung weg erschwert wird. Zu diesem Zweck kann beispielsweise der bei einer Servolenkung ohnehin vorhandene Servomotor verwendet werden.

Bei dem durchzuführenden Fahrmanöver kann es sich beispielsweise um ein Einparkmanöver handeln, wobei die Referenztrajektorie den idealen Weg von der Ausgangsposition des Fahrzeugs bzw. der aktuellen Fahrzeugstellung in die gewünschte Parkposition angibt. Gerade bei Einparkmanövern ist eine Fahrerunterstützung wünschenswert, insbesondere für unerfahrene Autofahrer oder für Autofahrer, die an ein neues oder selten genutztes Fahrzeug nicht gewöhnt sind. Es handelt sich ganz allgemein um Fahrmanöver mit einer Fahrzeuglängsgeschwindigkeit unterhalb eines Geschwindigkeitsschwellenwertes von beispielsweise 10 km/h.

Es ist weiterhin von Vorteil, wenn bei einem Fahrzeug im Anhängerbetrieb jeder Fahrzeugstellung entlang der Referenztrajektorie ein Sollknickwinkel zwischen der Fahrzeuglängsachse und der Anhängerlängsachse zugeordnet wird und wenn der aktuelle Knickwinkel bestimmt und mit dem entsprechenden Sollknickwinkel verglichen wird, wobei bei einer Winkelabweichung zwischen Sollknickwinkel und aktuellem Knickwinkel die Fahrzeuglängsgeschwindigkeit fahrerunabhängig beeinflusst wird. Hier wird zusätzlich eine Winkelabweichung zwischen Sollknickwinkel und aktuellem Knickwinkel berücksichtigt. Auch bei der Winkelabweichung zwischen aktuellem Knickwinkel und Sollknickwinkel kann eine Geschwindigkeitsregelung in Abhängigkeit des Betrages der Winkelabweichung erfolgen. Weiterhin wäre es auch möglich, die fahrerunabhängige Fahrzeugverzögerung umso größer zu wählen, je größer der Betrag der Winkelabweichung ist.

Im Folgenden wird die Erfindung anhand der beigefügten Zeichnung näher erläutert. Es zeigen:

Fig. 1 eine schematische Darstellung einer Solltrajektorie für ein Einparkmanöver in Draufsicht,

Fig. 2 eine blockschaltbildartige Darstellung eines Ausführungsbeispiels einer Vorrichtung zur Unterstützung des Fahrers bei einem Fahrmanöver,

Fig. 3a-3c eine erste Ausführungsform einer optischen Anzeige für die einzustellende Lenkradstellung für den Fahrer,

Fig. 4 eine zweite Ausführungsform einer optischen Anzeige für die einzustellende Lenkradstellung für den Fahrer,

Fig. 5 eine dritte Ausführungsform einer optischen Anzeige für die einzustellende Lenkradstellung für den Fahrer,

Fig. 6a eine Referenztrajektorie und die Grenztrajektorien zu einem bestimmten Zeitpunkt während eines Fahrmanövers

Fig. 6b ein Diagramm zu der in Fig. 6a dargestellten Situation, wobei die Fahrzeuglängsgeschwindigkeit v in Abhängigkeit vom Istlenkwinkel $\delta_{ist}$ aufgetragen ist, und

Fig. 7 eine schematische Darstellung eines Fahrzeugs im Anhängerbetrieb in Draufsicht.

Bei der Erfindung handelt es sich um ein Verfahren und eine Vorrichtung zur Unterstützung des Fahrers eines Fahrzeugs 10 bei bzw. während einem Fahrmanöver. Bei einem solchen Fahrmanöver kann es sich beispielsweise um ein Einparkmanöver, ein Rangiermanöver oder dergleichen handeln, wobei das Fahrzeug 10 im Solobetrieb oder im Anhängerbetrieb mit angehängtem Anhänger betrieben werden kann. Z.B. kann der Fahrer auch unterstützt werden beim Fahren im Anhängerbetrieb geradeaus rückwärts.

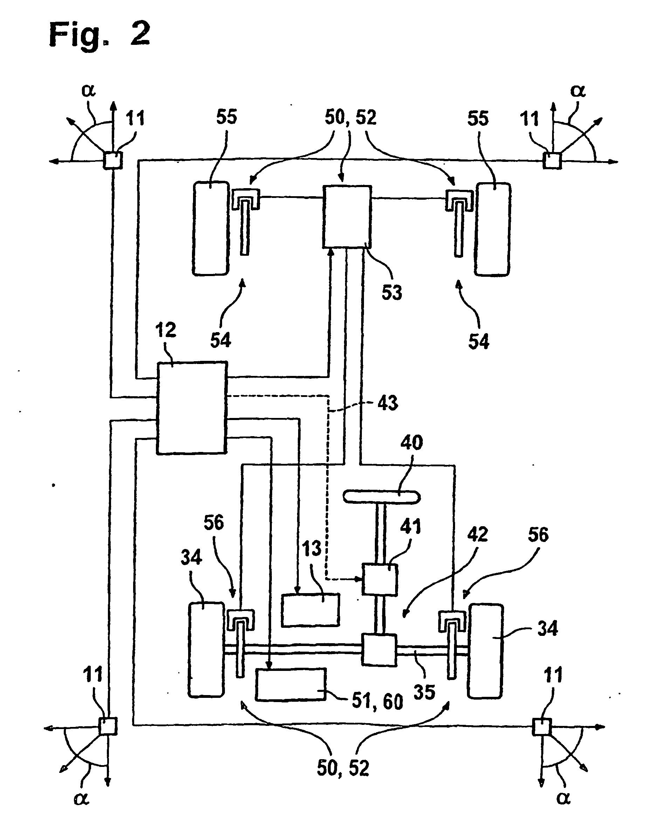

Bei Einparkmanövern wird zunächst mittels einer geeigneten Sensorik, beispielsweise mittels Ultraschallsensoreinheiten 11 während der Vorbeifahrt des Fahrzeuges 10 Parklücken vermessen und dahingehend ausgewertet, ob die Parklücke ausreichend groß ist für ein Einparkmanöver. Beim Ausführungsbeispiel nach Fig. 2 sind hierfür vier Ultraschallsensoreinheiten 11 vorgesehen, die jeweils in einem Eckbereich des Fahrzeugs 10 angeordnet sein können. Die Anzahl der vorhandenen Ultraschallsensoren 11 ist beliebig und hängt insbesondere auch davon ab, wie groß der Abstrahlwinkel α ist, unter dem die Sensorwellen abgestrahlt und die reflektierten Wellen empfangen werden. Alternativ zu den Ultraschallsensoreinheiten 11 können auch Radarsensoren oder Lasersensoren eingesetzt werden.

Die Auswertung der Sensordaten der Ultraschallsensoreinheiten 11 erfolgt in einer Auswerteeinrichtung 12, in der festgestellt wird, ob die ausgemessene Parklücke ausreichend groß ist zum Einparken des Fahrzeugs. Das Auswerteergebnis kann dem Fahrer durch eine Anzeigeeinrichtung 13 angezeigt werden.

Das Ausmessen der Parklücken und das Auswerten der Messergebnisse kann entweder unterhalb einer vorgebbaren Geschwindigkeitsschwelle ständig erfolgen oder alternativ erst dann, wenn der Fahrer eine entsprechende Anforderung eingegeben hat, beispielsweise über das Kombiinstrument.

Wurde eine ausreichend große Parklücke ermittelt, so kann der Fahrer das erfindungsgemäße Unterstützungsverfahren durch eine entsprechende Bedienanforderung einleiten. Eine Möglichkeit besteht darin, den Fahrer nach dem Auffinden einer geeigneten Parklücke automatisch - beispielsweise über das Kombiinstrument - zu fragen, ob er eine Einparkunterstützung wünscht. Der Fahrer braucht dann lediglich die Frage zu bestätigen, um das erfindungsgemäße Unterstützungsverfahren zu aktivieren. Eine andere Möglichkeit besteht darin, dass nach dem Auffinden einer geeigneten Parklücke, das Unterstützungsverfahren automatisch dann aktiviert wird, wenn das Fahrzeug innerhalb einer vorgebbaren Zeitspanne angehalten und der Rückwärtsgang eingelegt wird.

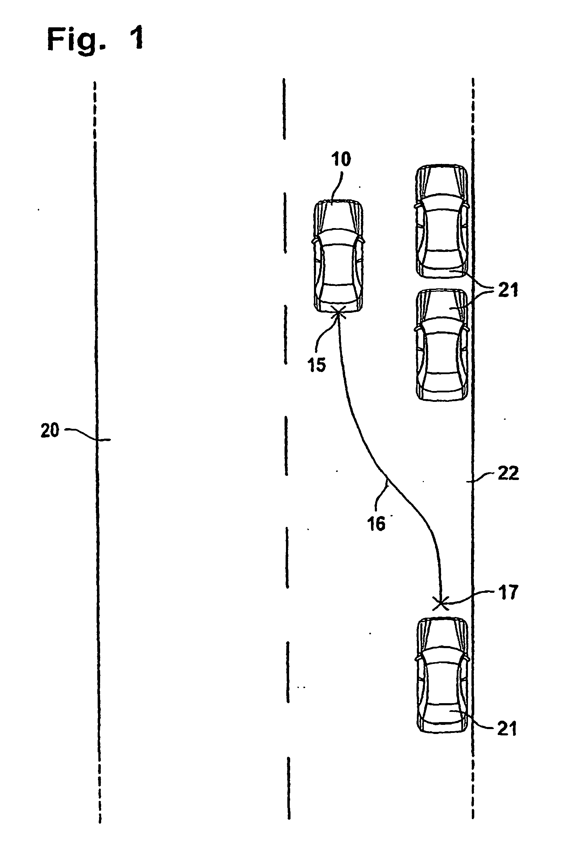

Fig. 1 zeigt eine typische Situation für ein Einparkmanöver eines Fahrzeugs 10 am Straßenrand einer Straße 20 zwischen anderen geparkten Fahrzeugen 21. Das Fahrzeug 10 ist auf der Strasse 20 entlang der Reihe parkender Fahrzeuge 21 gefahren und hat im Vorbeifahren mittels der Ultraschallsensoreinheiten 11 und der Auswerteeinrichtung 12 eine ausreichend große Parklücke 22 ermittelt. Dies wurde dem Fahrer über die Anzeigeeinrichtung 13 mitgeteilt und er hat das Fahrzeug angehalten.

In Abhängigkeit von zu Beginn des Fahrmanövers eingenommenen Startposition 15 des Fahrzeugs 10 wird in der Auswerteeinrichtung 12 eine Referenztrajektorie 16 ermittelt, die die Ideallinie darstellt, um das Fahrzeug ausgehend von seiner Startposition 15 in eine Ziel- oder Parkposition 17 zu bewegen. Die Referenztrajektorie 16 stellt somit den idealen zurückzulegenden Weg dar, der von der Startposition 15 in die Zielposition 17 führt.

Verfahren zur Bestimmung der Referenztrajektorie 16 sind beispielsweise aus der DE 29 01 504 B1, der DE 38 13 083 A1 oder der DE 199 40 007 A1 bekannt. Auf die bekannten Verfahren zur Bestimmung der Referenztrajektorie 16 wird an dieser Stelle ausdrücklich Bezug genommen.

Bei der Bestimmung der Referenztrajektorie können die Mindestabstände (wie Mindestabstand in Fahrzeuglängsrichtung, Mindestabstand in Fahrzeugquerrichtung), die das entlang der Referenztrajektorie zu bewegenden Fahrzeug zu Hindernissen einzuhalten hat, in Abhängigkeit von der Länge der gefundenen Parklücke variiert werden. Das heißt z.B., dass die Mindestabstände zu Hindernissen umso größer gewählt werden können, je länger die Parklücke ist. Dadurch kann dem Fahrer beim Einparken ein möglichst großer Spielraum gewährleistet werden, um die tolerierbaren Abweichungen der tatsächlichen Fahrzeugposition von der Referenztrajektorie so groß wie möglich zu machen. Dies erhöht den Komfort für den Fahrer.

Vor Beginn des Fahrmanövers mit in Startposition 15 befindlichen Fahrzeug 10 wird der Fahrer automatisch gefragt, ob er für das folgende Einparkmanöver eine Unterstützung wünscht, wobei der Fahrer durch eine entsprechende Eingabe die Unterstützung ablehnen oder annehmen kann.

Fordert der Fahrer für das Fahrmanöver die automatische Unterstützung nach dem erfindungsgemäßen Verfahren an, so wird ihm über die Anzeigeeinrichtung 13 die einzustellende Lenkradstellung bzw. der einzustellende Lenkradwinkel angezeigt, der das Fahrzeug entlang der aktuellen Referenztrajektorie 16 bewegen würde.

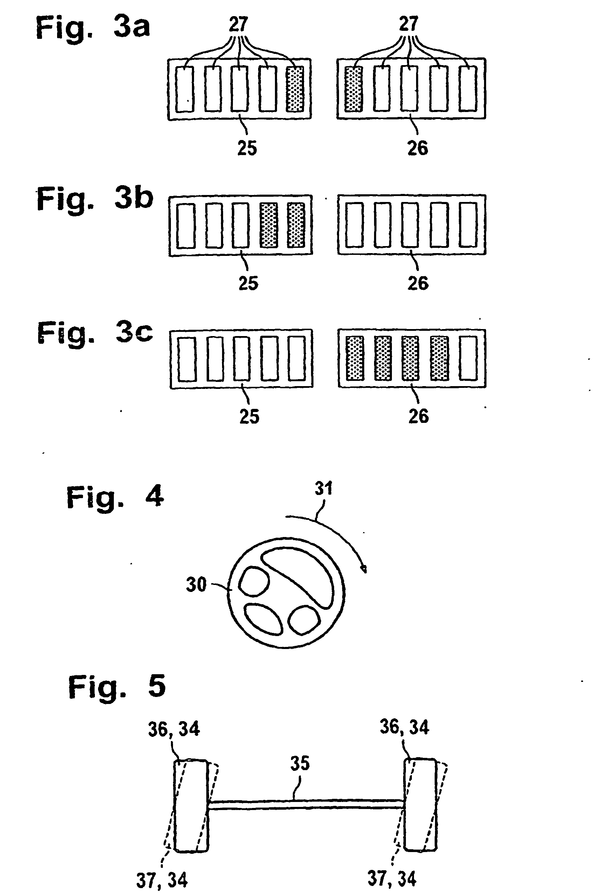

In den Fig. 3 - 5 sind verschiedene Beispiele von optischen Darstellungen angegeben, die dem Fahrer über die Anzeigeeinrichtung 13 angezeigt werden können. Das erste Ausführungsbeispiel einer optischen Anzeige gemäß der Fig. 3a - 3c ist eine Art Balkenanzeige. Ein linker Balken 25 gibt an, wenn das Lenkrad nach links zu drehen ist und ein rechter Balken 26 gibt an, wenn der Fahrer das Lenkrad nach rechts drehen soll. Je größer der Lenkradwinkel ist, den der Fahrer einzustellen hat, desto größer ist auch der angezeigte linke Balken 25 bzw. der rechte Balken 26. Beim Ausführungsbeispiel sind die beiden Balken 25, 26 von mehreren horizontal nebeneinander liegenden Leuchtmitteln, wie z.B. Leuchtdioden gebildet. Je mehr Leuchtdioden eines Balkens 25, 26 leuchten, desto größer ist der angeforderte Lenkradwinkel. Es versteht sich, dass alternativ die Art der Balkendarstellung auch mittels eines nicht näher dargestellten LC-Displays der Anzeigeeinrichtung 13 dargestellt werden könnte. Es wäre auch möglich, die in heutigen Fahrzeugen bereits vorhandene Balkenanzeige, die den Abstand zu einem Hindernis beim Einparken anzeigt, als Anzeigeeinrichtung 13 zu verwenden.

In Fig. 3a leuchtet die jeweils erste Leuchtdiode 27 der beiden Balken 25, 26, die zum jeweils anderen Balken 26 bzw. 25 benachbart angeordnet ist. Die leuchtenden Leuchtdioden 27 sind in Fig. 3 schematisch durch ein Funktmuster dargestellt. Leuchtet jeweils die erste Leuchtdiode 27 beider Balken 25, 26 wird dem Fahrer dadurch signalisiert, dass er den momentan eingestellten Lenkradwinkel unverändert beibehalten soll. Alternativ hierzu könnte auch eine einzelne, zwischen den beiden Balken 25, 26 angeordnete Nullstellungsleuchtdiode vorgesehen sein, die leuchtet, wenn die Lenkradposition unverändert bleiben soll.

In Fig. 3b wird dem Fahrer durch zwei leuchtende Leuchtdioden des linken Balkens 25 angezeigt, dass er das Lenkrad leicht nach links drehen soll. Sobald die angeforderte Lenkradstellung erreicht ist, erscheint wieder die in Fig. 3a dargestellte und oben beschriebene Anzeige. In Fig. 3c wird durch vier leuchtende Leuchtdioden des rechten Balkens 26 ein starker Lenkradeinschlag nach rechts vom Fahrer angefordert.

Die Anzahl der Leuchtdioden 27, die einen Balken 25, 26 bilden ist grundsätzlich beliebig wählbar und wird derart abgestimmt, dass dem Fahrer eine ausreichend feine Unterteilung in der Anforderung der einzustellenden Lenkradstellung angegeben werden kann. Beispielsgemäß enthält jeder Balken 25, 26 fünf Leuchtdioden 27.

Mittels der Anzeigeeinrichtung 13 können zusätzlich oder alternativ auch weitere Darstellungen angezeigt werden, die dem Fahrer die einzustellende Lenkradstellung angeben. Fig. 4 zeigt beispielsweise eine stilisierte Lenkraddarstellung 30 in Kombination mit einem Richtungspfeil 31, die dem Fahrer über ein LC-Display der Anzeigeeinrichtung 13 übermittelt werden kann, wobei die Lenkraddarstellung 30 und der Richtungspfeil 31 die angeforderte Drehrichtung bzw. den angeforderten Lenkradwinkel angeben. In Fig. 4 wird über die Lenkraddarstellung 30 und den Richtungspfeil 31 vom Fahrer ein leichter Lenkradeinschlag nach rechts angefordert. Eine weitere Ausführung einer optischen Darstellung zur Anforderung einer einzustellenden Lenkradstellung ist in Fig. 5 gezeigt. Dort sind schematisch die Fahrzeugräder 34 der lenkbaren Vorderachse 35 dargestellt. Die durch die ausgezogenen Linien dargestellte Radstellung ist die aktuelle Radstellung 36 der Fahrzeugräder 34, während die gestrichelte Darstellung die angeforderte Sollstellung 37 der gelenkten Fahrzeugräder 34 angibt. Der Fahrer muss demnach das Lenkrad in eine Stellung verlagern, in der die Sollstellung 37 der Fahrzeugräder 34 mit der aktuellen Radstellung 36 übereinstimmt.

Es versteht sich, dass anstatt der unterschiedlichen Liniendarstellung von Sollstellung 37 und aktueller Radstellung 36 der Fahrzeugräder 34 auch unterschiedliche Farben gewählt werden können, sofern die Anzeigeeinrichtung 13 über ein Farb-LC-Display verfügt.

Es ist nicht nur möglich, eine oder mehrere der beschriebenen optischen Anzeigemöglichkeiten zu verwenden, um dem Fahrer die einzustellende Lenkradstellung anzugeben, sondern es kann des Weiteren alternativ oder zusätzlich eine akustische Fahrerinformation und/oder eine haptische Fahrerinformation erfolgen, die den einzustellenden Lenkradwinkel angeben.

Die akustische Fahrerinformation kann beispielsweise über nicht näher dargestellte Lautsprecher im Fahrzeug durch eine Sprachausgabe erfolgen. Die haptische Fahrerinformation wird beim Ausführungsbeispiel anhand einer Kraft- bzw. Momentenrückmeldung am Lenkrad 40 vorgenommen. Hierfür ist die Auswerteeinrichtung 12 mit einem Servomotor 41 der Servolenkung 42 zur dessen Ansteuerung verbunden, wie dies in Fig. 2 durch die gestrichelte Verbindungslinie 43 angedeutet ist. Somit kann das Lenkradmoment am Lenkrad 40 von der Auswerteeinrichtung 12 über den Servomotor 41 zur haptischen Fahrerinformation des einzustellenden Lenkradwinkels variiert werden. Es ist dabei möglich, dass vom Fahrer aufzubringende Lenkradmoment für eine Drehrichtung von der angeforderten Lenkradstellung weg zu erhöhen und/oder das vom Fahrer aufzubringende Lenkradmoment in eine Drehstellung zur angeforderten Lenkradstellung hin zu verringern. Mithin kann der Fahrer durch das aufzubringende Lenkradmoment erfahren, in welche Drehrichtung er das Lenkrad bewegen muss, um die angeforderte Lenkradstellung einzustellen, wodurch eine haptische Fahrerinformation zur Angabe der einzustellenden Lenkradstellung realisiert ist.

Während des Fahrmanövers wird in Abhängigkeit der jeweils aktuellen Fahrzeugstellung $x_{F,akt}/y_{F,akt}/\Psi_{F,akt}$ die Stellungsabweichung des Fahrzeugs 10 von der durch die Referenztrajektorie 16 ermittelt und dem Fahrer mittels der Anzeigeeinrichtung 13 die einzustellende Lenkradstellung angezeigt, der die Stellungsabweichung reduziert, so dass das Fahrzeug wieder auf eine der Referenztrajektorie entsprechende Fahrtroute gebracht wird. Alternativ hierzu ist es grundsätzlich auch möglich die Stellungsabweichung automatisch auszuregeln.

Unter der aktuellen Fahrzeugstellung $x_{F,akt}/y_{F,akt}/\Psi_{F,akt}$ des Fahrzeugs 10 ist nicht nur die Fahrzeugposition $x_{F,akt}/y_{F,akt}$ in der Koordinatenebene in Bezug auf ein ortsfestes Koordinatensystem 22 der Straße 20 zu verstehen, sondern die Fahrzeugstellung beinhaltet auch die Ausrichtung der Fahrzeuglängsachse 71 bezogen auf das Koordinatensystem 22. Beispielsgemäß ist der Drehwinkel $\Psi_F$ zwischen der y-Achse des Koordinatensystems 22 und der Fahrzeuglängsachse 71 eingeschlossen. Der Solldrehwinkel entspricht mithin der Tangenten an die Referenztrajektorie 16.

Zu Beginn und während des Fahrmanövers wird zudem in Fahrmanöver-Fahrtrichtung 18 eine rechtsseitige Grenztrajektorie 23 und eine linksseitige Grenztrajektorie 24 in der Auswerteeinrichtung 12 berechnet. Die Grenztrajektorien 23, 24 hängen von der aktuellen Fahrzeugstellung $x_{F,akt}/y_{F,akt}/\Psi_{F,akt}$ ab. Sie geben in Fahrmanöver-Fahrtrichtung 18 gesehen die beiden Trajektorien an, entlang derer das Fahrzeug 10 aus der aktuellen Fahrzeugposition $x_{F,akt}/y_{F,akt}$ heraus gerade noch zur Zielposition 17 gelenkt werden kann. Die rechtsseitige Grenztrajektorie 23 erhält man durch das sukzessive Erhöhen des aktuellen Drehwinkels $\Psi_{F,akt}$ - im mathematisch positiven Sinn - bis zu einem oberen Grenzdrehwinkel $\Psi_{F,max}$, mit dem gerade noch eine Trajektorie, die rechtsseitige Grenztrajektorie 23, zur Zielposition 17 berechnet werden kann. Dabei bleiben die Werte der aktuellen Fahrzeugposition $x_{F,akt}/y_{F,akt}$ unverändert.

In analoger Weise wird der untere Grenzdrehwinkel $\Psi_{F,min}$ bestimmt, indem der aktuelle Drehwinkels $\Psi_{F,akt}$ sukzessive verringert wird, bis gerade noch die linsseitige Grenztrajektorie 24 zur Zielposition 17 bestimmt werden kann.

Daraus ergeben sich die folgenden Gleichungen:

$$\Psi_{F,max}=\Psi_{F,akt}+\Delta\Psi_L$$

und

$$\Psi_{F,min}=\Psi_{F,akt}-\Delta\Psi_R,$$

wobei $\Delta\Psi_L$ den Wert angibt, um den der aktuelle Drehwinkel erhöht wurde und $\Delta\Psi_R$ den Wert angibt, um den der aktuelle Drehwinkel verringert wurde, um die betreffenden Grenzdrehwinkel zu erhalten.

Diese Grenztrajektorien 23, 24 werden beispielsweise mit dem für die Berechnung der Referenztrajektorie 16 verwendeten Algorithmus bestimmt. Beispielsgemäß werden die Grenztrajektorien 23, 24 während des Fahrmanövers zyklisch ermittelt. Um den Rechenaufwand zu verringern, wird bei einem Rechenzyklus die eine Grenztrajektorie 23 oder 24 und beim darauffolgenden Rechenzyklus die jeweils andere Grenztrajektorie 24 bzw. 23 berechnet. Die Genauigkeit bei dieser Vorgehensweise ist völlig ausreichend. Im vergleich zu dem zur Bestimmung der Referenztrajektorie verwendeten Algorithmus können zur Reduzierung des Rechenaufwandes weitere Vereinfachungen zugelassen werden. Z.B. können sich die Grenztrajektorien lediglich aus weniger Rechenaufwand erfordernden Bahnkurven wie Kreisabschnitten zusammensetzen.

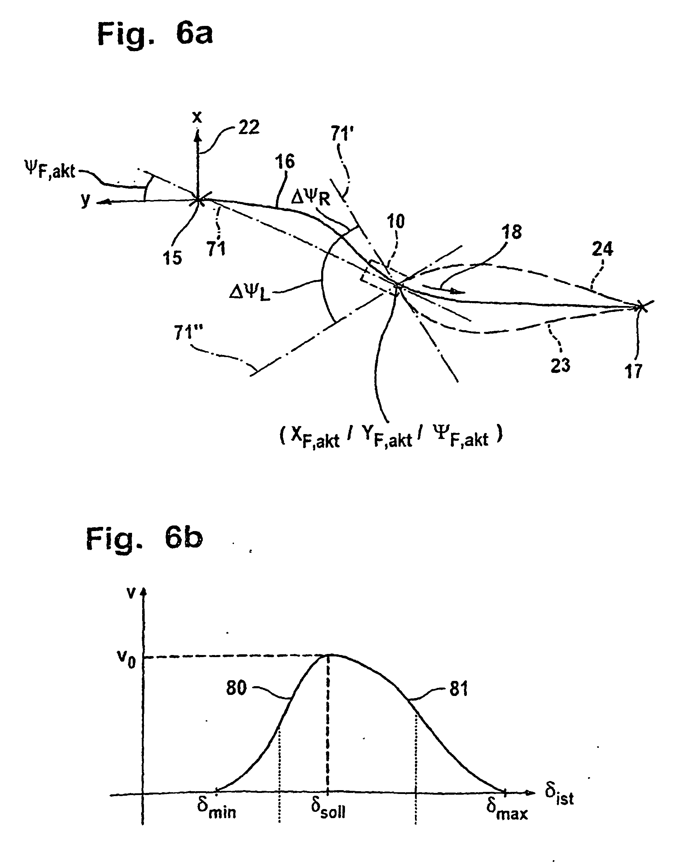

Anhand der Figuren 6a und 6b wird im folgenden erläutert, wie die Beeinflussung der Fahrzeuglängsgeschwindigkeit v erfolgt, wenn eine Lenkwinkelabweichung $d_{LW}$ zwischen dem vom Fahrer tatsächlich eingestellten Istlenkwinkel $\delta_{ist}$ und dem der angeforderten, einzustellenden Lenkradstellung entsprechenden Solllenkwinkel $\delta_{soll}$ erfolgt.

Das Fahrzeug 10 befindet sich zum Betrachtungszeitpunkt in der aktuellen Fahrzeugstellung, die durch die Werte $x_{F,akt}/y_{F,akt}/\Psi_{F,akt}$ in Bezug auf das Koordinatensystem 22, dessen Nullpunkt in der Startposition 15 liegt, beschrieben ist. Anhand dieser aktuellen Fahrzeugstellung $x_{F,akt}/y_{F,akt}/\Psi_{F,akt}$ wird die Bestimmung des oberen Grenzdrehwinkels $\Psi_{F,max}$ und des unteren Grenzdrehwinkels $\Psi_{F,min}$ erläutert.

Die aktuelle Fahrzeugposition $x_{F,akt}/y_{F,akt}$ bleibt bei der Bestimmung der beiden Grenzdrehwinkel $\Psi_{F,max}$, $\Psi_{F,min}$ unverändert. Das Fahrzeug 10 wird quasi virtuell in dieser Position so lange um seine Hochachse gedreht, bis der betreffende Grenzdrehwinkel erreicht ist, aus dem es gerade noch möglich ist, eine Trajektorie - das heißt eine mögliche Fahrstrecke des Fahrzeugs 10 - nämlich die betreffende Grenztrajektorie 23 bzw. 24 zur Zielposition 17 zu ermitteln.

Zunächst sei das Fahrzeug um seine Hochachse so lange nach rechts gedreht (mathematisch negativer Sinn), bis der aktuelle Drehwinkel $\Psi_{F,akt}$ um $\Delta\Psi_R$ verringert ist, so dass die Fahrzeuglängsachse die in Figur 6a mit 71' bezeichnete Stellung einnimmt. Die Fahrzeuglängsachse 71' schließt mit der y-Achse des Koordinatensystems 22 dabei den unteren Grenzdrehwinkel $\Psi_{F,min}$ ein. Die sich in dieser Fahrzeugstellung ergebende in Fahrmanöver-Fahrtrichtung 18 gesehen rechtsseitige Grenztrajektorie 23 ist in Figur 6a dargestellt.

Gleichermaßen kann das Fahrzeug 10 in seiner aktuellen Fahrzeugposition virtuell um seine Hochachse nach links gedreht werden (mathematisch positiver Sinn), solange, bis gerade noch die linksseitige Grenztrajektorie 24 zur Zielposition 17 möglich ist. Der aktuelle Drehwinkel $\Psi_{F,akt}$ wurde dabei um $\Delta\Psi_L$ vergrößert, so dass sich zwischen der in dieser Drehstellung mit 71" bezeichneten Fahrzeuglängsachse und der y-Achse des Koordinatensystems 22 der obere Grenzdrehwinkel $\Psi_{F,max}$ ergibt. Auf dieser Weise wird ein Drehwinkel-Toleranzbereich zwischen dem unteren Grenzdrehwinkel $\Psi_{F,min}$ und dem oberen Grenzdrehwinkel $\Psi_{F,max}$ berechnet.

Dieser Drehwinkel-Toleranzbereich wird dann unter Verwendung einer grundsätzlich beliebig wählbaren Funktion f zur Bestimmung der Fahrzeuglängsgeschwindigkeit v verwendet. Die Fahrzeuglängsgeschwindigkeit v hängt dabei von der Lenkwinkelabweichung $d_{LW}$ ab.

In Fig. 6b ist ein Beispiel einer Abhängigkeit der Fahrzeuglängsgeschwindigkeit v vom Istlenkwinkel $\delta_{ist}$ aufgetragen. Stellt der Fahrzeugführer über die Lenkradstellung einen Istlenkwinkel $\delta_{ist}$ ein, der mit dem einzustellenden Solllenkwinkel $\delta_{soll}$ übereinstimmt, so beträgt die Fahrzeuglängsgeschwindigkeit $v=v_0$. Dieser Punkt stellt beim Beispiel nach Figur 6b den Scheitelpunkt einer Gauß-Kurve dar. Bezüglich einer parallelen zur v-Achse durch den Scheitelpunkt der Gauß-Kurve ist diese unsymmetrisch ausgebildet. Beispielsgemäß ist jeder der beiden sich durch Teilung der Gauß-Kurve im Scheitelpunkt ergebenden Kurvenabschnitte 80 bzw. 81 abhängig von der Drehwinkeldifferenz $\Delta\Psi_R$ bzw. $\Delta\Psi_L$ zwischen dem aktuellen Drehwinkel $\Psi_{F,akt}$ und dem entsprechenden oberen bzw. unteren Grenzdrehwinkel $\Psi_{F,max}$ bzw. $\Psi_{F,min}$. Der erste Kurvenabschnitt 80 zwischen dem Solllenkwinkel $\delta_{soll}$ hin zu kleineren Istlenkwinkeln $\delta_{ist}$ ist so bestimmt, dass die Standardabweichung der Drehwinkeldifferenz $\Delta\Psi_R$ zwischen dem unteren Grenzdrehwinkel $\Psi_{F,min}$ und dem aktuellen Fahr-

zeugdrehwinkel $\Psi_{F,akt}$ entspricht. Analog ist der zweite Kurvenabschnitt 81 ausgehend vom Solllenkwinkel $\delta_{soll}$ zu größeren Istlenkwinkeln $\delta_{ist}$ hin so bestimmt, dass die Standardabweichung dieses zweiten Kurvenabschnitts al der Drehwinkeldifferenz $\Delta\Psi_L$ zwischen dem oberen Grenzdrehwinkel $\Psi_{F,max}$ und dem aktuellen Fahrzeug-drehwinkel $\Psi_{F,akt}$ entspricht.

Aus diesen beiden Kurvenabschnitten 80, 81 ergeben sich dann ein minimal zulässiger Istlenkwinkel $\delta_{min}$ und ein maximal zulässiger Istlenkwinkel $\delta_{max}$. Wie man aus Fig. 6b erkennt, ist die Differenz zwischen dem Solllenkwinkel $\delta_{soll}$ und dem minimal zulässigen Istlenk-winkel $\delta_{min}$ kleiner als die Differenz zwischen dem ma-ximal zulässigen Istlenkwinkel $\delta_{max}$ und dem Solllenk-winkel $\delta_{soll}$. Entsprechend wird die Fahrzeuglängsge-schwindigkeit v bei einem abweichenden Istlenkwinkel $\delta_{ist}$, der kleiner ist als der Solllenkwinkel $\delta_{soll}$ stärker ver-ringert als dies bei einer entsprechenden Abweichung vom Solllenkwinkel $\delta_{soll}$ zu größeren Istlenkwinkeln $\delta_{ist}$ hin der Fall wäre. Dies ist anschaulich so zu erklären, dass bei einer Änderung des Fahrzeugdrehwinkels in mathematisch positivem Sinn ein größerer Toleranzbereich zur Verfügung steht, als bei Änderungen des ak-tuellen Fahrzeugdrehwinkels in mathematisch negati-vem Sinn (vgl. Fig. 6a).

Sobald der Fahrer einen Istlenkwinkel $\delta_{ist}$ ein-stellt, der beim Weiterfahren des Fahrzeugs 10 dazu führen würde, dass das Fahrzeug 10 eine Fahrzeugposition einnimmt, aus der heraus keine Trajektorie zur Zielposition 17 gefunden werden kann, so wird das Fahrzeug zum Stillstand gebracht. Das Fahrzeug wird dann fahrerunabhängig erst wieder beschleunigt, wenn der Fahrer einen Istlenkwinkel $\delta_{ist}$ einstellt, der zwi-schen den minimal zulässigen Istlenkwinkel $\delta_{min}$ und dem maximal zulässigen Istlenkwinkel $\delta_{max}$ liegt.

Bei einer besonders vorteilhaften Ausgestaltung wird immer dann, wenn das Fahrzeug automatisch bis zum Stillstand verzögert wurde, eine erneute Be-rechnung der Referenztrajektorie durchgeführt. Alterna-tiv zur Verwendung einer Gaußfunktion könnte auch eine Dreiecksfunktion oder eine beliebige andere Kurven-form mit dem Scheitelpunkt $\delta_{soll}/v_0$ verwendet werden. Diese Funktion kann insbesondere empirisch in Fahrversuchen ermittelt werden, um das gewünschte Fahrgefühl einzustellen.

Beim Ausführungsbeispiel wird die Fahrzeuglängsgeschwindigkeit v in Abhängigkeit des Ist-lenkwinkels $\delta_{ist}$ bzw. der Lenkwinkelabweichung $d_{LW}$ geregelt. Dies erfolgt durch Ansteuerung von Verzögerungsmittel 50 und/oder Vortriebsmitteln 51 des Fahrzeugs 10.

Die Verzögerungsmittel 50 sind beim Ausführungsbeispiel gemäß Fig. 2 von einer Bremsvorrichtung 52 gebildet, die eine Bremssteuereinheit 53 und von die-ser Bremssteuereinheit 53 angesteuerte Radbremsein-richtungen 54, die den Fahrzeugrädern 55 der Hinterachse des Fahrzeugs zugeordnet sind und Radbremseinrichtungen 56, die den Fahrzeugrädern 34 der Vorderachse 35 des Fahrzeugs 10 zugeordnet sind. Zur Ansteuerung der Bremsvorrichtung 52 ist die Auswerteeinrichtung 12 mit der Bremssteuereinheit 53 verbunden.

Alternativ zur Geschwindigkeitsregelung kann die Fahrzeuglängsgeschwindigkeit v ausgehend von der Maximalgeschwindigkeit $v_0$, die etwa 5 km/h betragen kann, bei einer vorliegenden Lenkwinkelabweichung $d_{LW}$ durch das Hervorrufen eines Bremsdruckes oder einer Bremskraft lediglich verringert werden ohne die Geschwindigkeit auf einen Sollwert zu regeln.

Zur Fahrzeugverzögerung erfolgt alternativ oder gleichzeitig zur Ansteuerung der Bremsvorrichtung 52 eine Ansteuerung der Vortriebsmittel 51. Hierfür ist die Auswerteeinrichtung 12 mit dem in Fig. 2 schematisch dargestellten Motorsteuergerät 60 verbunden, dass hier die Vortriebsmittel 51 symbolisiert. Aus Gründen der Übersichtlichkeit wurde der komplette Antriebsstrang mit Motorsteuergerät 60, dem Fahrzeugmotor, dem Getriebe, der Antriebswelle, usw. nicht dargestellt.

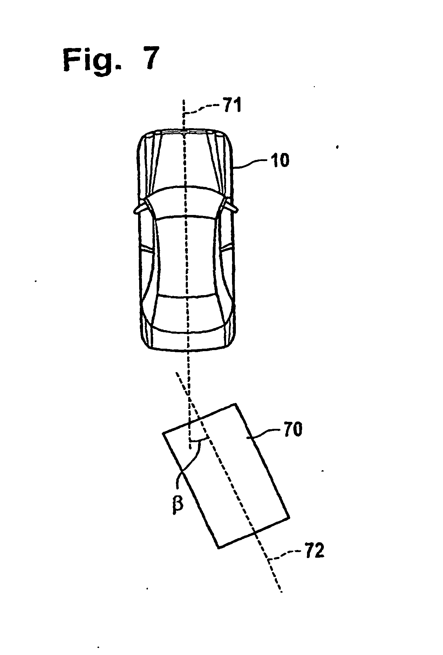

Das erfindungsgemäße Verfahren kann in einer abgewandelten Form auch für Fahrmanöver des Fahrzeugs 10 mit einem Anhänger 70 eingesetzt werden. Dabei kann alternativ oder zusätzlich zur Beeinflussung der Fahrzeuglängsgeschwindigkeit v in Abhängigkeit von der Lenkwinkelabweichung $d_{LW}$ auch eine Beeinflussung der Fahrzeuglängsgeschwindigkeit v in Abhängigkeit von der Knickwinkelabweichung zwi-schen einem Sollknickwinkel $\beta_{soll}$ und einem aktuellen Knickwinkel $\beta_{akt}$ erfolgen. Der Knickwinkel $\beta$ ist zwi-schen der Fahrzeuglängsachse 71 und der Anhängerlängsachse 72 gebildet (siehe Fig. 7). Wegen der besseren Übersichtlichkeit ist in Fig. 7 die Anhängerkupplung und die Anhängerdeichsel zur Verbindung des Fahrzeugs 10 mit dem Anhänger 70 nicht dargestellt.

Beim Anhängerbetrieb wird jeder zur durchfahrenden Fahrzeugstellung des Fahrzeugs 10 entlang der Referenztrajektorie 16 ein entsprechender Soll-knickwinkel $\beta_{soll}$ zugeordnet. Das einfachste Beispiel wäre das gerade Rückwärtsfahren des Fahrzeugs 10 mit dem Anhänger 70, so dass der Sollknickwinkel $\beta_{soll}$ während des gesamten Fahrmanövers gleich Null beträgt.

Das Fahrzeug 10 weist Mittel zur Bestimmung des Sollknickwinkels $\beta_{soll}$ auf, die beispielsgemäß in der Auswerteeinrichtung 12 enthalten sind. Des Weiteren verfügt das Fahrzeug 10 und/oder der Anhänger 70 über Mittel zur Bestimmung des aktuellen Knickwinkels $\beta_{akt}$, die hier nicht näher dargestellt sind. Beispielsweise kann der Knickwinkel zwischen Fahrzeug 10 und Anhänger 70 durch an sich bekannte Knickwinkelsensoren erfasst werden.

Während des Fahrmanövers wird dem Fahrer nunmehr angezeigt, welche Lenkradstellung er einzustellen hat, damit der aktuell erfasste Knickwinkel $\beta_{akt}$ dem Sollknickwinkel $\beta_{soll}$ entspricht. Weicht der aktuelle Knickwinkel $\beta_{akt}$ vom Sollknick-winkel $\beta_{soll}$ ab, so wer-den die Verzögerungsmittel 50 und/oder die Vortriebsmittel 51 des Fahrzeugs 10 fahrerunabhängig zur Reduzierung der Fahrzeuglängsgeschwindigkeit v angesteuert. Je größer die Knickwinkelabweichung zwischen dem aktuellen Knickwinkel $\beta_{akt}$ und dem Sollknickwinkel $\beta_{soll}$ ist, desto größer ist die automatisch hervorgerufene Bremskraft bzw. der Bremsdruck p bzw. die Fahrzeugverzögerung. Es ist auch möglich, die Längsgeschwindigkeit des Fahrzeugs v in Abhängigkeit von der Knickwinkelabweichung zwischen dem Sollknickwinkel $\beta_{soll}$ und dem aktuellen Knickwinkel $\beta_{akt}$ zu regeln, wobei die Sollgeschwindigkeit $v_{soll}$ umso geringer ist, je größer die Knickwinkelabweichung zwischen aktuellem Knickwinkel $\beta_{akt}$ und Sollknickwinkel $\beta_{soll}$ ist.

Das Unterstützungsverfahren für Fahrmanöver im Anhängerbetrieb in Abhängigkeit vom Knickwinkel $\beta$ ist auch unabhängig von der Bestimmung einer Referenztrajektorie ausführbar. Zum Beispiel kann bei einem Fahrmanöver geradeaus rückwärts mit Anhänger 70 lediglich die Knickwinkelabweichung zwischen dem Sollknickwinkel $\beta_{soll}$ und dem aktuellen Knickwinkel $\beta_{akt}$ berücksichtigt werden bei der Anforderung des einzustellenden Lenkradwinkels und der Ansteuerung der Verzögerungsmittel 50 und/oder Vortriebsmittel 51.

Wird bei komplexeren Fahrmanövern im Anhängerbetrieb, entlang der Referenztrajektorie, jeder Position des Fahrzeugs 10 und des Anhängers 70 ein entsprechender Sollknickwinkel $\beta_{soll}$ zugeordnet, so berücksichtigt die Rückmeldung für den Fahrer über den einzustellenden Lenkradwinkel und die automatische Ansteuerung der Verzögerungsmittel 50 und/oder Vortriebsmittel 51 sowohl die Lenkwinkelabweichung $d_{LW}$, als auch die Knickwinkelabweichung.

**Patentansprüche**

1. Verfahren zur Unterstützung des Fahrers eines Fahrzeugs (10) bei einem von einem Einpark- oder Rangiermanöver gebildeten Fahrmanöver, wobei eine dem Fahrmanöver entsprechende Referenztrajektorie (16) bestimmt wird, entlang der das Fahrzeug (19) bewegt werden soll, und wobei dem Fahrer während des Fahrmanövers die jeweils einzustellende, das Fahrzeug (10) entlang der Referenztrajektorie (16, 19) steuernde Lenkradstellung angegeben wird, wobei die Fahrzeuglängsgeschwindigkeit (v) bei einer Lenkwinkelabweichung ($d_{LW}$) zwischen dem vom Fahrer tatsächlich eingestellten Istlenkwinkel ($\delta_{ist}$) und dem der angeforderten Lenkradstellung entsprechenden Solllenkwinkel ($\delta_{soll}$) fahrerunabhängig beeinflusst wird,
   **dadurch gekennzeichnet,**
   **dass** die Beeinflussung der Fahrzeuglängsgeschwindigkeit derart abhängig vom Betrag der Lenkwinkelabweichung ($d_{LW}$) erfolgt, dass die Fahrzeuglängsgeschwindigkeit (v) um so geringer gewählt und durch entsprechende Steuer- oder Regeleingriffe eingestellt wird, je größer der Betrag der Lenkwinkelabweichung ($d_{LW}$) ist.

2. Verfahren nach Anspruch 1,
   **dadurch gekennzeichnet,**
   **dass** während des Fahrmanövers, abhängig von der aktuellen Fahrzeugstellung ($X_{F,akt}$/$Y_{F,akt}$/$\Psi_{F,akt}$) ein die zulässigen Lenkwinkel definierender Lenkwinkel-Toleranzbereich ($\delta_{min}$ bis $\delta_{max}$) bestimmt wird und die Beeinflussung der Fahrzeuglängsgeschwindigkeit (v) vom Toleranzabstand ($\delta_{soll}$-$\delta_{min}$ bzw. $\delta_{max}$-$\delta_{soll}$) zwischen dem Solllenkwinkel ($\delta_{soll}$) und den Toleranzbereichsgrenzen ($\delta_{min}$ bzw. $\delta_{max}$) abhängt.

3. Verfahren nach Anspruch 2,
   **dadurch gekennzeichnet,**
   **dass** zur Ermittlung des Lenkwinkel-Toleranzbereichs ein Drehwinkel-Toleranzbereich bestimmt wird, wobei der aktuelle Drehwinkel ($\Psi_{F,akt}$) zwischen der Fahrzeuglängsachse (71) und einer Koordinatenachse (y) eines ortsfesten Koordinatensystems (22) so lange vergrößert bzw. verkleinert wird, bis es gerade noch möglich ist eine Trajektorie zur Zielposition (17) zu bestimmen.

4. Verfahren nach Anspruch 2 oder 3,
   **dadurch gekennzeichnet,**
   **dass** die Fahrzeuglängsgeschwindigkeit (v) um so geringer gewählt wird, je kleiner der Betrag des Toleranzabstandes ($\delta_{soll}$-$\delta_{min}$ bzw. $\delta_{max}$-$\delta_{soll}$) ist.

5. Verfahren nach einem der Ansprüche 1 bis 4,
   **dadurch gekennzeichnet,**
   **dass** die Beeinflussung der Fahrzeuglängsgeschwindigkeit durch eine Geschwindigkeitsregelung erfolgt.

6. Verfahren nach einem der Ansprüche 1 bis 5,
   **dadurch gekennzeichnet,**
   **dass** das Fahrzeug (10) bis zum Stillstand verzögert und im Stillstand gehalten wird, solange aufgrund der vorhandenen Lenkwinkelabweichung ($d_{LW}$) das Fahrzeug (10) bei einer Weiterfahrt eine Fahrzeugstellung einnehmen würde, aus der heraus die Zielposition (17) ohne Rangierunterbrechung des Fahrmanövers nicht mehr erreichbar ist.

7. Verfahren nach Anspruch 6,
   **dadurch gekennzeichnet,**
   **dass** das Fahrzeug (10) fahrerunabhängig wieder beschleunigt wird, wenn der Fahrer eine Lenkradstellung einstellt, die zu einer zulässigen Lenkwinkelabweichung ($d_{LW}$) führt.

8. Verfahren nach einem der Ansprüche 1 bis 7,
   **dadurch gekennzeichnet,**
   **dass** die Angabe der einzustellenden Lenkradstellung durch Mittel zur akustischen Fahrerinformation und/oder Mittel zur optischen Fahrerinformation (13) und/oder Mittel zur haptischen Fahrerinformation (40 und 41) erfolgt.

9. Verfahren nach Anspruch 8,
**dadurch gekennzeichnet,**
**dass** die Mittel zur haptischen Fahrerinformation (40 und 41) Mittel zur Veränderung des vom Fahrer aufzubringenden Lenkradmomentes aufweisen.

10. Verfahren nach einem der Ansprüche 1 bis 9,
**dadurch gekennzeichnet,**
**dass** das Fahrmanöver ein Einparkmanöver ist und die Referenztrajektorie (16) den idealen Weg von der aktuellen Fahrzeugstellung ($x_{F,akt}/y_{F,akt}/\Psi_{F,akt}$) in die Parkposition (17) angibt.

11. Verfahren nach einem der Ansprüche 1 bis 10,
**dadurch gekennzeichnet,**
**dass** bei einem Fahrzeug (10) im Anhängerbetrieb jeder Fahrzeugstellung entlang der aktuellen Referenztrajektorie (19) ein Sollknickwinkel ($\beta_{soll}$) zwischen der Fahrzeuglängsachse (71) und der Anhängerlängsachse (72) zugeordnet wird und dass der aktuelle Knickwinkel ($\beta_{akt}$) bestimmt und mit dem entsprechenden Sollknickwinkel ($\beta_{soll}$) verglichen wird, wobei bei einer Winkelabweichung zwischen Sollknickwinkel ($\beta_{soll}$) und aktuellem Knickwinkel ($\beta_{akt}$) die Fahrzeuglängsgeschwindigkeit (v) fahrerunabhängig beeinflusst wird.

12. Vorrichtung zur Durchführung eines Verfahrens zur Unterstützung des Fahrers bei einem von einem Einpark- oder Rangiermanöver gebildeten Fahrmanöver nach einem der Ansprüche 1 bis 11, mit Mitteln (12)zur Bestimmung einer dem Fahrmanöver entsprechenden Referenztrajektorie (16) und Mitteln (13; 40 und 41) zur Angabe der vom Fahrer einzustellenden, das Fahrzeug (10) entlang der Referenztrajektorie (19) steuernden Lenkradstellung, wobei die Fahrzeuglängsgeschwindigkeit (v) durch fahrerunabhängig ansteuerbare Verzögerungsmittel (50) und/oder Vortriebsmittel (51) beeinflusst wird, wenn in einer Auswerteeinrichtung (12) eine Lenkwinkelabweichung ($d_{LW}$) zwischen dem vom Fahrer tatsächlich eingestellten Istlenkwinkel ($\delta_{ist}$) und dem der angeforderten Lenkradstellung entsprechenden Solllenkwinkel ($\delta_{soll}$) festgestellt wird,
**dadurch gekennzeichnet,**
**dass** die Beeinflussung der Fahrzeuglängsgeschwindigkeit derart abhängig vom Betrag der Lenkwinkelabweichung ($d_{LW}$) erfolgt, dass die Fahrzeuglängsgeschwindigkeit (v) um so geringer gewählt und durch entsprechende Steuer- oder Regeleingriffe eingestellt wird, je größer der Betrag der Lenkwinkelabweichung ($d_{LW}$) ist.

13. Vorrichtung nach Anspruch 12,

**dadurch gekennzeichnet,**
**dass** Mittel (12) zur Bestimmung des Sollkrrickwinkers ($\beta_{soll}$) zwischen der Fahrzeuglängsachse (71) und der Anhängerlängsachse (71) und Mittel zur Bestimmung des aktuellen Knickwinkels ($\beta_{akt}$) vorgesehen sind, dass die Auswerteeinrichtung (12) den Sollknickwinkel ($\beta_{soll}$) und den aktuellen Knickwinkel ($\beta_{akt}$) vergleicht, und dass bei einer festgestellten Winkelabweichung zwischen dem Sollknickwinkel ($\beta_{soll}$) und dem aktuellen Knickwinkel ($\beta_{akt}$) die Verzögerungsmittel (50) und/oder Vortriebsmittel (51) des Fahrzeugs (10) angesteuert werden.

## Claims

1. Method for supporting the driver of a vehicle (10) during a driving manoeuvre involving parking or similar manoeuvring, wherein a reference trajectory (16) corresponding to the driving manoeuvre, along which the vehicle (19) is to be moved, is determined, and wherein the driver is, during the driving manoeuvre, is informed of the steering wheel position to be set to steer the vehicle (10) along the reference trajectory (16, 19), the longitudinal speed (v) of the vehicle being influenced independent of the driver at a steering angle differential ($d_{LW}$) between the actual steering angle ($\delta_{ist}$) set by the driver and the set steering angle ($\delta_{soll}$) corresponding to the required steering wheel position,
**characterised in that**
the longitudinal speed of the vehicle is so influenced in dependence on the amount of the steering angle differential ($d_{LW}$) that the longitudinal speed (v) of the vehicle is selected the lower and is adjusted the lower by suitable open or closed loop control actions, the greater the amount of the steering angle differential ($d_{LW}$) is.

2. Method according to claim 1,
**characterised in that**
during the driving manoeuvre, a steering angle tolerance range ($\delta_{min}$ to $\delta_{max}$) defining the permissible steering angles in dependence on the current vehicle position ($x_{F,akt}/y_{F,akt}/\Psi_{F,akt}$) is determined, and **in that** the influencing of the longitudinal speed (v) of the vehicle is determined by the tolerance distance ($\delta_{soll}-\delta_{min}$ or $\delta_{max}-\delta_{soll}$ respectively) between the set steering angle ($\delta_{soll}$) and the tolerance limits ($\delta_{min}$ and $\delta_{max}$ respectively).

3. Method according to claim 2,
**characterised in that**
a rotational angle tolerance range is determined to obtain the steering angle tolerance range, wherein the current rotational angle ($\Psi_{F,akt}$) between the longitudinal axis (71) of the vehicle and a coordinate axis (y) of a fixed coordinate system (22) is increased or reduced until it is just possible to determine a trajectory to the target position (17).

4. Method according to claim 2 or 3,
**characterised in that**
the longitudinal speed (v) of the vehicle is selected the lower, the smaller the tolerance distance ($\delta_{soll}$-$\delta_{min}$ or $\delta_{max}$-$\delta_{soll}$ respectively) is.

5. Method according to any of claims 1 to 4,
**characterised in that**
the longitudinal speed of the vehicle is influenced by a speed control.

6. Method according to any of claims 1 to 5,
**characterised in that**
the vehicle (10) is decelerated to a standstill and held stationary as long as the vehicle, if continuing to travel, would, as a result of the existing steering angle differential ($d_{LW}$), adopt a vehicle position from which the target position (17) cannot be reached without any interruption to the driving manoeuvre.

7. Method according to claim 6,
**characterised in that**
the vehicle (10) is once again accelerated independent of the driver, as soon as the driver sets a steering wheel position resulting in a permissible steering angle differential ($d_{LW}$).

8. Method according to any of claims 1 to 7,
**characterised in that**
the steering wheel position to be set is specified by means for audible driver information and/or by means for visual driver information (13) and/or by means for haptic driver information (40 and 41).

9. Method according to claim 9
**characterised in that**
the means for haptic driver information (40 and 41) incorporate means for changing the steering wheel torque to be applied by the driver.

10. Method according to any of claims 1 to 9,
**characterised in that**
the driving manoeuvre is a parking manoeuvre, and **in that** the reference trajectory (16) specifies the ideal path from the current vehicle position ($x_{F,akt}$/$y_{F,akt}$/$\Psi_{F,akt}$) to the parking position (17).

11. Method according to any of claims 1 to 10,
**characterised in that**,
in the trailer mode of a vehicle (10), a set articulation angle ($\beta_{soll}$) between the longitudinal axis (71) of the vehicle and the longitudinal axis (72) of the trailer is assigned to each vehicle position along the reference trajectory (19), and **in that** the actual articulation angle ($\beta_{akt}$) is determined and compared to the set articulation angle ($\beta_{soll}$), the longitudinal speed (v) of the vehicle being influenced independent of the driver at any differential between set articulation angle ($\beta_{soll}$) and actual articulation angle ($\beta_{akt}$).

12. Device for the execution of a method for supporting the driver during a driving manoeuvre involving parking or similar manoeuvring according to any of claims 1 to 11, with means (12) for the determination of a reference trajectory (16) corresponding to the driving manoeuvre and with means (13; 40 and 41) for specifying the steering wheel position to be set by the driver to steer the vehicle (10) along the reference trajectory (19), wherein the longitudinal speed (v) of the vehicle is influenced by deceleration means (50) and/or propulsion means (51) selectable independent of the driver whenever an evaluation device (12) detects a steering angle differential ($d_{LW}$) between the actual steering angle ($\delta_{ist}$) set by the driver and the set steering angle ($\delta_{soll}$) corresponding to the required steering wheel position,
**characterised in that**
the longitudinal speed of the vehicle is so influenced in dependence on the amount of the steering angle differential ($d_{LW}$) that the longitudinal speed (v) of the vehicle is selected the lower and is adjusted the lower by suitable open or closed loop control actions, the greater the amount of the steering angle differential ($d_{LW}$) is.

13. Device according to claim 12,
**characterised in that**
means (12) for the determination of the set articulation angle ($\beta_{soll}$) between the longitudinal axis (71) of the vehicle and the longitudinal axis (72) of the trailer and means for the determination of the actual articulation angle ($\beta_{akt}$) are provided, **in that** the evaluation device (12) compares the set articulation angle ($\beta_{soll}$) to the actual articulation angle ($\beta_{akt}$), and **in that**, at a detected differential between the set articulation angle ($\beta_{soll}$) and the actual articulation angle ($\beta_{akt}$), the deceleration means (50) and/or the propulsion means (51) of the vehicle (10) are selected.

**Revendications**

1. Procédé d'assistance au conducteur d'un véhicule (10), lors d'une manoeuvre de conduite, formée d'une manoeuvre d'entrée en stationnement ou de rangement, selon lequel une trajectoire de référence (16), correspondant à la manoeuvre de conduite, est déterminée, trajectoire de référence le long de laquelle le véhicule (19) doit être déplacé, et selon lequel au conducteur, pendant la manoeuvre de conduite, est indiquée la position de volant chaque fois à régler, commandant le véhicule (10) le long de la trajectoire de référence (16, 19), la vitesse longitudinale de véhicule (v) étant influencée en cas d'écart d'angle de braquage ($d_{LW}$), entre l'angle de braquage réel ($\delta_{réel}$), réglé effectivement par conducteur, et l'angle de braquage de consigne ($\delta_{consigne}$), correspondant à la position de volant requise,
**caractérisé en ce que**
l'influence sur la vitesse longitudinale de véhicule se fait, en fonction de l'ampleur de l'écart d'angle de braquage ($d_{LW}$), de manière que la vitesse longitudinale de véhicule (v) soit choisie d'autant plus faible, et réglée par des actions de commande ou de régulation correspondantes, que l'ampleur de l'écart angulaire de braquage ($d_{LW}$) est importante.

2. Procédé selon la revendication 1, **caractérisé en ce que**, pendant la manoeuvre de conduite, en fonction de la position de véhicule actuelle ($x_{F,\,actuel}/y_{F,\,actuel}/\Psi_{F,\,actuel}$), est déterminée une plage de tolérance d'angle de braquage ($\delta_{min}$ à $\delta_{max}$), définissant les angles de braquage admissibles, et l'influence sur la vitesse longitudinale de véhicule (v) dépend de la marge de tolérance ($\delta_{consigne}$ - $\delta_{min}$) ou ($\delta_{max}$ - $\delta_{consigne}$) entre l'angle de braquage de consigne ($\delta_{consigne}$) et les limites de plage de tolérance ($\delta_{min}$ ou $\delta_{max}$).

3. Procédé selon la revendication 2, **caractérisé en ce que**, pour déterminer la plage de tolérance d'angle de braquage, est déterminée une plage de tolérance d'angle de braquage, l'angle actuel de braquage ($\Psi_{F,\,actuel}$), entre l'axe longitudinal de véhicule (71) et un axe de coordonnées (y) d'un système de coordonnées (22) fixe en position étant augmenté ou diminué jusqu'à ce que, justement, il soit encore possible de déterminer une trajectoire allant à la position cible (17).

4. Procédé selon la revendication 2 ou 3, **caractérisé en ce que** la vitesse longitudinale de véhicule (v) est choisie d'autant plus petite que l'est la valeur de l'écart de tolérance ($\delta_{consigne}$- $\delta_{min}$ ou $\delta_{max}$ - $\delta_{consigne}$)·

5. Procédé selon l'une des revendications 1 à 4, **caractérisé en ce que** l'influence sur la vitesse longitudinale de véhicule est assurée au moyen d'une régulation de vitesse.

6. Procédé selon l'une des revendications 1 à 5, **caractérisé en ce que** le véhicule (10) est ralenti jusqu'à l'arrêt et maintenu à l'arrêt, tant que, du fait de l'écart d'angle de braquage ($d_{LW}$) existant, le véhicule (10), en cas de continuation de roulage, devrait prendre une position de véhicule, à partir de laquelle la position cible (17) ne pourrait plus être atteinte sans interruption du processus de rangement de la manoeuvre de conduite.

7. Procédé selon la revendication 6, **caractérisé en ce que** le véhicule (10) est de nouveau accéléré indépendamment du conducteur, lorsque le conducteur règle une position du volant, menant à un écart d'angle de braquage ($d_{LW}$) admissible.

8. Procédé selon l'une des revendications 1 à 7, **caractérisé en ce que** l'indication de la position de volant à régler est obtenue à l'aide de moyens d'information acoustique du conducteur et/ou de moyens d'information optique du conducteur (13) et/ou de moyens d'information haptique* du conducteur (40 et 41).

9. Procédé selon la revendication 8, **caractérisé en ce que** les moyens d'information haptique du conducteur (40 et 41) présentent des moyens de modification du couple au volant, à appliquer par le conducteur.

10. Procédé selon l'une revendications 1 à 9, **caractérisé en ce que** la manoeuvre de conduite est une manoeuvre de mise en stationnement et la trajectoire de référence (16) indique le chemin idéal, allant de la position actuelle de véhicule ($x_F$, actuel/$y_F$, actuel/$\Psi_F$, actuel) à la position de stationnement (17).

11. Procédé selon l'une revendications 1 à 10, **caractérisé en ce qu'**en cas d'un véhicule (10) en fonctionnement attelé à une remorque, à chaque position de véhicule, le long de la trajectoire de référence actuelle (19), est associé un angle de consigne de brisure ($\beta_{consigne}$), entre l'axe longitudinal de véhicule (71) et l'axe longitudinal de remorque (72), et **en ce que** l'angle de brisure actuel ($\beta_{actuel}$) est comparé à l'angle de consigne de brisure ($\beta_{consigne}$) correspondant, une influence étant exercée, indépendemment du conducteur, sur la vitesse longitudinale de véhicule (v) dans le cas d'un écart angulaire entre l'angle de consigne de brisure ($\beta_{consigne}$) et l'angle de brisure actuel ($\beta_{actuel}$).

12. Dispositif de mise en oeuvre d'un procédé d'assistance au conducteur, lors d'une manoeuvre de conduite formée d'une manoeuvre d'entrée en stationnement ou de rangement, selon l'une revendications 1 à 11, comprenant des moyens (12) pour déterminer une trajectoire de référence (16) correspondant à la manoeuvre de conduite, et des moyens (13 ; 40 et 41) pour indiquer la position de volant à régler par le conducteur, commandant le véhicule (10) le long de la trajectoire de référence (19), la vitesse longitudinale de véhicule (v) étant influencée par des moyens de ralentissement (50) et/ou des moyens d'accélération (51) commandable de façon indépendante du conducteur, lorsque, dans un dispositif d'évaluation (12), un écart d'angle de braquage ($d_{LW}$), entre l'angle de braquage réel ($\beta_{réel}$) réglé effectivement par le conducteur et l'angle de braquage de consigne ($\beta_{consigne}$) correspondant à la position requise du volant, est constaté, **caractérisé en ce que**
l'influence sur la vitesse longitudinale de véhicule est exercée en fonction de l'ampleur de l'écart angulaire de braquage ($d_{LW}$), de manière que la vitesse longitudinale de véhicule (v) soit choisie d'autant plus faible, et réglée par des interventions de commande ou de régulation correspondantes, que l'ampleur de l'écart d'angle de braquage ($d_{LW}$) est important.

13. Dispositif selon la revendication 12, **caractérisé en ce que** des moyens (12) de détermination de l'angle de consigne de brisure ($\beta_{consigne}$), entre l'axe longitudinal de véhicule (71) et l'axe longitudinal de remorque (71), et des moyens de détermination de l'angle de brisure actuel ($\beta_{actuel}$) sont prévus, **en ce que** le dispositif d'évaluation (72) compare l'angle de consigne de brisure ($\beta_{consigne}$) et l'angle de brisure actuel ($\beta_{actuel}$) et **en ce que**, en cas de constatation d'un écart angulaire entre l'angle de consigne de brisure ($\beta_{consigne}$) et l'angle de brisure actuel ($\beta_{actuel}$), les moyens de ralentissement (50) et/ou les moyens d'accélération (51) du véhicule (10) sont commandés.

# Fig. 1

EP 1 521 687 B1

Fig. 2

14

## Fig. 3a

27  27

25  26

## Fig. 3b

25  26

## Fig. 3c

25  26

## Fig. 4

31

30

## Fig. 5

36, 34  36, 34

35

37, 34  37, 34

# Fig. 6a

$$( X_{F,akt} \, / \, Y_{F,akt} \, / \, \Psi_{F,akt} )$$

# Fig. 6b

# Fig. 7